(19) 

Europäisches Patentamt
European Patent Office
Office européen des brevets

(11) **EP 3 691 806 B1**

(12) **EUROPÄISCHE PATENTSCHRIFT**

(45) Veröffentlichungstag und Bekanntmachung des Hinweises auf die Patenterteilung:
**20.10.2021 Patentblatt 2021/42**

(21) Anmeldenummer: **18728913.7**

(22) Anmeldetag: **12.06.2018**

(51) Int Cl.:
**B21B 37/28** (2006.01)

(86) Internationale Anmeldenummer:
**PCT/EP2018/065427**

(87) Internationale Veröffentlichungsnummer:
**WO 2019/068376 (11.04.2019 Gazette 2019/15)**

(54) **PLANHEITSREGELUNG MIT OPTIMIERER**

FLATNESS CONTROL WITH OPTIMISER

DISPOSITIF DE RÉGLAGE DE PLANÉITÉ DOTÉ D'UN DISPOSITIF D'OPTIMISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.10.2017 EP 17194392**

(43) Veröffentlichungstag der Anmeldung:
**12.08.2020 Patentblatt 2020/33**

(73) Patentinhaber: **Primetals Technologies Germany GmbH**
**91058 Erlangen (DE)**

(72) Erfinder:
• **DRESSLER, Matthias**
**91052 Erlangen (DE)**

• **MAIERHOFER, Andreas**
**91080 Marloffstein (DE)**
• **MÜLLER, Andreas**
**90579 Langenzenn (DE)**
• **THEKALE, Alexander**
**91058 Erlangen (DE)**
• **VELJOVIC, Slobodan**
**91058 Erlangen (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
**WO-A1-95/19591     WO-A1-2006/132585**
**US-A- 6 098 060**

**Beschreibung**

Gebiet der Technik

Die vorliegende Erfindung geht aus von einem Betriebsverfahren für ein Walzgerüst, in dem ein Metallband gewalzt wird,

- wobei eine Steuereinrichtung für das Walzgerüst mit einem Arbeitstakt jeweils eine Anzahl an Stellgrößen für eine entsprechende Anzahl von Planheitsstellgliedern des Walzgerüsts ermittelt und die Planheitsstellglieder entsprechend den ermittelten Stellgrößen ansteuert.

Die vorliegende Erfindung geht weiterhin aus von einem Computerprogramm, das Maschinencode umfasst, der von einer Steuereinrichtung für ein Walzgerüst zum Walzen eines Metallbandes abarbeitbar ist, wobei die Abarbeitung des Maschinencodes durch die Steuereinrichtung bewirkt, dass die Steuereinrichtung das Walzgerüst gemäß einem derartigen Betriebsverfahren betreibt.

Die vorliegende Erfindung geht weiterhin aus von einer Steuereinrichtung für ein Walzgerüst zum Walzen eines Metallbandes, wobei die Steuereinrichtung als softwareprogrammierbare Steuereinrichtung ausgebildet ist und mit einem derartigen Computerprogramm programmiert ist, so dass sie das Walzgerüst gemäß einem derartigen Betriebsverfahren betreibt.

Die vorliegende Erfindung geht weiterhin aus von einem Walzgerüst zum Walzen eines Metallbandes,

- wobei das Walzgerüst eine Anzahl von Planheitsstellgliedern aufweist, mittels derer die Planheit des aus dem Walzgerüst auslaufenden Metallbandes beeinflussbar ist,
- wobei das Walzgerüst eine derartige Steuereinrichtung aufweist, von der die Planheitsstellglieder des Walzgerüsts gemäß einem derartigen Betriebsverfahren angesteuert werden.

Stand der Technik

Die oben genannten Gegenstände sind beispielsweise aus der US 2016/0 052 032 A1 bekannt. Bei der US 2016/0 052 032 A1 erfolgt eine Singulärwertzerlegung der sogenannten Gerüstmatrix. Aufbauend auf der Singulärwertzerlegung werden im Eigenwertsystem des Walzgerüsts Kombinationen der Stellgrößen für die Planheitsstellglieder ermittelt, aus denen sodann die Stellgrößen für die Planheitsstellglieder ermittelt werden.

Aus der WO 2006/132 585 A1 ist ein gattungsgemässes Verfahren zur Optimierung einer Planheitssteuerung beim Walzen eines Bandes bekannt, wobei die Ansteuerung einer beliebigen Anzahl von Aktuatoren optimiert wird. Es wird der Planheitsfehler - also die Abweichung Ist-Soll - ermittelt. Dieser Planheitsfehler wird einer Singulärwertzerlegung unterzogen. Im Rahmen der Singulärwertzerlegung werden Nebenbedingungen beachtet, nämlich Aktuatorlimitierungen. Der Offenbarungsgehalt der WO 2006/132 585 A1 korrespondiert somit im wesentlichen mit dem der genannten US-Schrift.

Aus der WO 95/19591 A1 ist ein Verfahren zur Führung eines Prozesses bekannt, insbesondere das Walzen eines Bandes und dessen Planheitsregelung. Bei der WO 95/19591 A1 geht es im Kern darum, die Wirksamkeiten der einzelnen Stellglieder zu ermitteln und bei Bedarf nachzuführen. Sie offenbart weiterhin eine übliche Regelung auf Basis eines Soll-Ist-Vergleichs.

Aus der US 6 098 060 A ist ein Verfahren zum Steuern eines Prozesses bekannt, bei dem Stellgrößen für eine Mehrzahl von Aktuatoren ermittelt werden, die einen Prozess beeinflussen. Als Beispiel eines derartigen Prozesses ist eine Planheitssteuerung für ein Metallband genannt. Bei der US 6 098 060 A soll eine optimale Prozesssteuerung bewirkt werden.

Als Planheit eines Metallbandes wird üblicherweise die lokale oder globale Längendifferenz des Metallbandes als Funktion über die Bandbreite bezeichnet. Im Rahmen des Walzprozesses wird eine Soll-Planheit vorgegeben, die das Metallband nach dem Walzen nach Möglichkeit aufweisen sollte.

Die Planheit des Metallbandes wird durch verschiedene Effekte beeinflusst. Manche dieser Effekte treten beim Walzen des Metallbandes auf und können nicht beeinflusst werden. Ein Beispiel für einen derartigen Effekt ist eine Änderung der Walzkraft während des Walzens des Metallbandes. Andere dieser Effekte können durch entsprechende Ansteuerung von Stellgliedern des Walzgerüsts - nachstehend Planheitsstellglieder genannt - beeinflusst werden. Beispielsweise haben sowohl die Walzenrückbiegung als auch - einen entsprechenden Walzenschliff vorausgesetzt - eine axiale Walzenverschiebung Einfluss auf die Planheit. Gleiches gilt für eine über die Breite des Metallbandes oder der Arbeitswalzen ortsabhängige Temperaturbeeinflussung der Arbeitswalzen, beispielsweise eine Kühlung.

Die Wirkung derartiger Planheitsstellglieder auf die Planheit kann im Rahmen der Planheitsregelung als im wesentlichen proportional zur Ansteuerung des jeweiligen Planheitsstellgliedes angesehen werden. Es ist daher möglich, die Änderung der Planheit durch eine Änderung der Stellgröße des entsprechenden Planheitsstellgliedes und eine Wirksamkeit des entsprechenden Planheitsstellgliedes zu beschreiben.

Ziel jeder Planheitsregelung ist es, die Planheit des Metallbandes über die gesamte Bandlänge möglichst konstant zu halten und so gut wie möglich nahe an die Soll-Planheit anzunähern. Hierzu wird im Rahmen der Planheitsregelung versucht, eine gemessene Abweichung von der Soll-Planheit mit Hilfe der Planheitsstellglieder zu kompensieren. Zu diesem Zweck werden Einstellungen der Planheitsstellglieder derart bestimmt, dass die Summe der daraus resultierenden Planheitsänderungen der Regelabweichung entgegenwirkt und sie so gut wie möglich kompensiert. Man spricht dann von einem optimalen Arbeitspunkt.

Im Stand der Technik erfolgt die Bestimmung der Wirksamkeiten der Planheitsstellglieder oftmals manuell und im Voraus. Insbesondere erfolgt beim aktiven Walzen eines Metallbandes eine leichte zusätzliche Ansteuerung eines jeweiligen Planheitsstellgliedes und wird die sich hierbei ergebende Wirkung erfasst. Die sich dadurch ergebenden Wirksamkeit werden in der Steuereinrichtung für das Walzgerüst hinterlegt. Diese Vorgehensweise ist fehleranfällig, zeitintensiv und ungenau. Weiterhin können Änderungen der Wirksamkeit - wenn überhaupt - nur mit einem erheblichen Zeitverzug erfasst werden. Der Zeitverzug liegt oftmals im Bereich von Monaten.

Bei Einsatz von mehreren Planheitsstellgliedern ist weiterhin das Auffinden des optimalen Arbeitspunktes schwierig. Die erwähnte US 2016/0 052 032 A1 stellt hier zwar einen gewissen Fortschritt dar, ist aber immer noch verbesserungsfähig. Insbesondere können im Rahmen dieses Verfahrens nur alle Planheitsstellglieder gleichzeitig optimiert werden, nicht aber einzeln oder sequenziell nacheinander. Weiterhin können bei diesem Ansatz die Randbedingungen, denen die Planheitsstellglieder unterworfen sind, nicht im Rahmen der Ermittlung der Stellgrößen berücksichtigt werden. Die nachträgliche Berücksichtigung führt jedoch in der Regel dazu, dass nicht mehr das Optimum realisiert wird. Der Betrieb des Walzgerüsts außerhalb des optimalen Arbeitspunktes führt oftmals zu einem erhöhten Verschleiß und einer erhöhten Abnutzung der Planheitsstellglieder oder anderer Elemente des Walzgerüsts.

Weiterhin können die Planheitsstellglieder oftmals nicht unabhängig voneinander angesteuert werden. Insbesondere kann es geschehen, dass die Ansteuerung eines Planheitsstellgliedes und die Ansteuerung eines anderen Planheitsstellgliedes sich gegenseitig beeinträchtigen, kompensieren oder stören. Das Auffinden des optimalen Arbeitspunktes unter diesen Bedingungen ist sehr schwer.

In der Regel erfolgt weiterhin mittels einer dem Walzgerüst nachgeordneten entsprechenden Messeinrichtung die Erfassung der Planheitsmesswerte. Die Messeinrichtung kann beispielsweise als segmentierte Messrolle ausgebildet sein. Das Ausregeln der Störungen erfolgt in der Regel mittels PI-Reglern. Diese werden bei der Inbetriebsetzung des Walzgerüsts aufwendig parametriert. Aufgrund des Abstands der Messeinrichtung und der relativ langsamen Reaktion der Planheitsstellglieder ist die Regelung sehr träge. Dadurch müssen Qualitätseinbußen hingenommen werden, da Störungen nur langsam ausgeregelt werden können.

Aus der US 2006/0 282 177 A1 ist bekannt, ein technisches System unter Anwendung des Innere-Punkte-Verfahrens zu steuern. Hierbei löst der zugehörige Optimierer ein Optimierungsproblem, in das die gewünschten Zustände des Systems, die Steuervariablen und lineare Randbedingungen eingehen. Als Anwendungsbeispiel für das technische System ist in der US 2006/0 282 177 A1 eine Gasturbine genannt.

Aus dem Fachaufsatz "Real-time Dynamic Optimization of Nonlinear Systems: A Flatness-based Approach" von M. Guay, Proceedings of the 44th IEEE Conference on Decision and Control, and the European Control Conference 2005, Seiten 5842 bis 5847, ist bekannt, ein Innere-Punkte-Verfahren zur Echtzeitsteuerung zu verwenden. Als Anwendungsbeispiele sind allgemein Batch-Prozesse und konkret ein Bioreaktor genannt.

Aus dem Vorlesungsmanuskript "C21 Model Predictive Control" von Mark Cannon, University auf Oxford, 2016, ist ein modellprädiktiver Regler bekannt. Als Anwendungsbeispiel für den Regler ist unter anderem das Warmwalzen genannt, wobei als Zielgrößen unter anderem die Restspannung genannt ist. Als mögliches Lösungsverfahren ist ein Innere-Punkte-Verfahren genannt.

Die CN 104 698 842 A nennt ein Innere-Punkte-Verfahren zum Lösen eines nichtlinearen Optimierungsproblems. Es ist erwähnt, dass als Randbedingungen insbesondere die oberen und unteren Grenzen der Stellgrößen und die Veränderung der Stellgrößen berücksichtigt werden. In die Kostenfunktion scheinen nur die Zielgrößen und die Änderung der Stellgrößen einzugehen.

Zusammenfassung der Erfindung

Die Aufgabe der vorliegenden Erfindung besteht darin, Möglichkeiten zu schaffen, mittels derer eine überlegene Planheitsregelung realisiert wird.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 14.

Erfindungsgemäß wird ein Betriebsverfahren für ein Walzgerüst der eingangs genannten Art dadurch ausgestaltet,

- dass die Steuereinrichtung einen ersten Optimierer implementiert, der zunächst die aktuellen Korrekturgrößen vorläufig ansetzt und gemäß der Beziehung

$$f(s) = f0 + W \cdot (s - s') \quad \texttt{oder} \quad f(s) = f0 + W \cdot s$$

eine Gesamtheit von Planheitswerten ermittelt, wobei

-- f die Gesamtheit von Planheitswerten ist,
-- s eine Gesamtheit der aktuellen Korrekturgrößen ist,
-- f0 anfängliche Planheitswerte sind,
-- W eine Wirksamkeitsmatrix ist und
-- s' eine Gesamtheit der im vorhergehenden Arbeitstakt ermittelten Korrekturgrößen ist, und sodann durch Variieren der aktuellen Korrekturgrößen (s) die Beziehung

$$\|f(s - s0) - f^*\| + \alpha\|s - s0\| + \beta\|s - s'\| \tag{1}$$

minimiert, wobei
-- f* eine Gesamtheit von Planheitssollwerten ist,
-- s0 eine Gesamtheit von Zielwerten für die Korrekturgrößen ist und
-- $\alpha$ und $\beta$ Wichtungsfaktoren sind,

- dass der erste Optimierer beim Ermitteln der aktuellen Korrekturgrößen lineare, vorzugsweise ausschließlich lineare, Nebenbedingungen beachtet,
- dass die linearen Nebenbedingungen die Form

$$C \cdot s \leq B$$

oder die Form

$$C \cdot s \leq B \quad \texttt{und} \quad |s - s'| < c$$

aufweisen, wobei C eine Matrix, B ein Vektor mit den von den aktuellen Korrekturwerten einzuhaltenden Nebenbedingungen und c ein Vektor mit den von der Differenz der aktuellen Korrekturwerte (s) gegenüber den Korrekturwerten des vorhergehenden Arbeitstaktes einzuhaltenden Nebenbedingungen sind, und
- dass die Steuereinrichtung die Stellgrößen für die Planheitsstellglieder unter Berücksichtigung der variierten aktuellen Korrekturgrößen ermittelt.

Die Planheitsstellglieder können nach Bedarf bestimmt sein. Beispielsweise können bei einem normalen Walzgerüst (insbesondere einem Quartogerüst oder einem Sextogerüst) die Planheitsstellglieder die Walzenverschiebung, die Walzenrückbiegung und die segmentierte Temperaturbeeinflussung sein. Gegebenenfalls kann zusätzlich auch eine Schräglage von Walzen - insbesondere der Arbeitswalzen - realisiert werden. Bei einem Cluster-Walzgerüst, beispielsweise einem 12-Rollen-Walzgerüst oder einem 20-Rollen-Walzgerüst, können auch andere Planheitsstellglieder und Planheitsstellglieder in größerer Zahl realisiert sein.

In Beziehung 1 steht der erste Term für den Fehler Ist-Soll, d.h. die Abweichung der errechneten Planheit von der Sollplanheit. Der zweite Term bewirkt für eine möglichst geringe Abweichung der Aussteuerung der Planheitsstellglieder von den Zielwerten. Die Zielwerte können beispielsweise derart bestimmt sein, dass die zugehörigen Planheitsstellglieder möglichst gering belastet werden. Der dritte Term bewirkt eine möglichst geringe Änderung der Aussteuerung der Planheitsstellglieder. Die Wichtungsfaktoren sind nicht-negativ. Meist ist mindestens einer der Wichtungsfaktoren größer als 0. Oftmals sind beide Wichtungsfaktoren größer als 0. Ein Wert von 0 für beide Wichtungsfaktoren kann im Einzelfall sinnvoll sein, beispielsweise wenn nur ein einziges Planheitsstellglied zur Verfügung steht. In diesem Fall kann auch die Norm für den ersten Term, also für den Fehler Ist-Soll, beispielsweise durch eine einfache Betragsbildung realisiert werden.

Die verwendete Norm kann für jeden Term individuell bestimmt sein. In der Regel handelt es sich jeweils um die "normale" euklidische Norm, also die Wurzel aus der Summe der Quadrate der einzelnen Terme.

Die Gesamtheit der anfänglichen Planheitswerte entspricht einem Vektor der anfänglichen Planheit. In analoger Weise entspricht die Gesamtheit der Planheitssollwerte einem Vektor der Sollplanheit. Die Ortsauflösung in Bandbreite kann nach Bedarf sein. Typisch liegt sie bei mehr als 10 Stützstellen, oftmals oberhalb von 50 Stützstellen. In manchen Fällen werden bis zu 100 Stützstellen realisiert, in seltenen Fällen sogar noch mehr.

Aufgrund der Art und Weise, auf die das Optimierungsproblem angesetzt ist, löst der erste Optimierer somit ein nichtlineares Optimierungsproblem mit linearen Nebenbedingungen. Insbesondere aufgrund dieses Umstandes ist der erste Optimierer onlinefähig. Weiterhin wird durch die gleichzeitige Berücksichtigung der Nebenbedingungen bei der Optimierung die optimale Lösung auf einfache Weise ermittelbar.

In einer ersten grundlegenden Ausgestaltung der vorliegenden Erfindung ist vorgesehen,

- dass mittels einer Messeinrichtung ortsaufgelöst über die Breite des Metallbandes Planheitsmesswerte erfasst werden,
- dass die Planheitsmesswerte und die zugehörigen Planheitssollwerte der Steuereinrichtung zugeführt werden und
- dass die Planheitsmesswerte der Steuereinrichtung als anfängliche Planheitswerte zugeführt werden.

Die Gesamtheit der Planheitsmesswerte entspricht analog zu zuvor einem Vektor der Istplanheit.

Die Steuereinrichtung implementiert in der ersten grundlegenden Ausgestaltung in der Regel nicht nur den ersten Optimierer, sondern auch einen dem ersten Optimierer nachgeordneten Planheitsregler, dem die von dem ersten Optimierer ermittelten aktuellen Korrekturgrößen zugeführt werden und der aus den aktuellen Korrekturgrößen Änderungswerte für die Stellgrößen für die Planheitsstellglieder ermittelt. In einer bevorzugten Ausgestaltung der vorliegenden Erfindung ist der Planheitsregler als nach dem Beobachter-Prinzip arbeitender Regler ausgebildet. Der Planheitsregler ist also derart ausgebildet, dass er

- die Summe der mit einem Verstärkungsfaktor gewichteten aktuellen Korrekturgrößen und des Ausgangssignals eines Streckenmodells des Walzgerüsts bildet,
- anhand der so gebildeten Summe ein vorläufiges Signal ermittelt,
- durch Differenzieren des vorläufigen Signals die Änderungswerte für die Stellgrößen für die Planheitsstellglieder ermittelt und
- das vorläufige Signal dem Streckenmodell des Walzgerüsts als Eingangssignal zuführt.

Das Streckenmodell des Walzgerüsts kann hierbei unterschiedliche Teilmodelle für die verschiedenen Planheitsstellglieder aufweisen. In den unterschiedlichen Teilmodellen kann insbesondere die jeweilige Dynamik des jeweiligen Planheitsstellgliedes individuell berücksichtigt werden.

Im einfachsten Fall ist das vorläufige Signal mit der gebildeten Summe identisch. Vorzugsweise aber ermittelt der Planheitsregler das vorläufige Signal durch Filtern der gebildeten Summe in einem Filter. In Ausgestaltung dieser Vorgehensweise ist es weiterhin möglich, dass die Steuereinrichtung den Filter dynamisch parametriert.

In manchen Fällen ist es sinnvoll, dass die Steuereinrichtung

- zusätzlich zum ersten Optimierer - einen zweiten Optimierer implementiert, der gleichartig zum ersten Optimierer aufgebaut ist, der also auf die gleiche Art und Weise wie der erste Optimierer aktuelle Korrekturgrößen ermittelt. In diesem Fall ist jedoch vorgesehen,
- dass die Gesamtheit von Planheitswerten für den zweiten Optimierer anhand einer Gesamtheit von nominellen Planheitswerten und der für den zweiten Optimierer gültigen aktuellen Korrekturgrößen ermittelt wird,
- dass die nominellen Planheitswerte mit einer nominellen Änderung der Walzkraft korrespondieren,
- dass die Wichtungsfaktoren für den zweiten Optimierer den Wert 0 aufweisen und
- dass die Steuereinrichtung die Stellgrößen für die Planheitsstellglieder unter zusätzlicher Berücksichtigung einer tatsächlichen Änderung der Walzkraft, der nominellen Änderung der Walzkraft und der mittels des zweiten Optimierers ermittelten aktuellen Korrekturgrößen ermittelt.

Der zweite Optimierer ermittelt seine aktuellen Korrekturgrößen also unabhängig vom ersten Optimierer. Das mittels des zweiten Optimierers ermittelte Ergebnis - insbesondere der Quotient von jeweiliger aktueller Korrekturgröße und nomineller Änderung der Walzkraft - entspricht einer Wirksamkeit des jeweiligen Planheitsstellgliedes. Multipliziert mit der Änderung der Walzkraft ist daher eine direkte Ermittlung der zugehörigen Stellgröße möglich. Diese Vorgehensweise weist den Vorteil auf, dass sie sehr schnell arbeitet, da nicht abgewartet werden muss, bis der jeweils gewalzte Abschnitt des Walzguts die Messeinrichtung erreicht.

Im Einzelfall ist es auch möglich, dass zwar nur der erste Optimierer vorhanden ist, der erste Optimierer aber so arbeitet, wie dies soeben für den zweiten Optimierer erläutert wurde. Diese Vorgehensweise stellt zwar eine reine Steuerung dar. Der Vorteil besteht aber darin, dass sie schnell reagiert und bei jedem Walzgerüst anwendbar ist, unabhängig davon, ob dem jeweiligen Walzgerüst eine Messeinrichtung für die Erfassung der Planheitsmesswerte nachgeordnet ist.

Vorzugsweise variiert der erste Optimierer die aktuellen Korrekturgrößen in mehreren Iterationen. Dadurch kann das Optimum der aktuellen Korrekturgrößen besonders gut ermittelt werden.

Vorzugsweise beendet der erste Optimierer das Variieren der aktuellen Korrekturgrößen, sobald

- er eine vorbestimmten Anzahl von Iterationen ausgeführt hat und/oder
- er die aktuellen Korrekturgrößen für eine vorbestimmte Zeit variiert hat und/oder
- die aktuellen Korrekturgrößen sich von Iteration zu Iteration nur mehr unwesentlich ändern und/oder
- die Beziehung

$$\|f(s) - f^*\| + \alpha \|s - s0\| + \beta \|s - s'\|$$

sich nur mehr unwesentlich ändert und/oder
- ein anderes Abbruchkriterium erfüllt ist.

Dadurch kann die Onlinefähigkeit und damit die Echtzeitfähigkeit insbesondere auch dann erhalten bleiben, wenn das Variieren der aktuellen Korrekturgrößen nur zu einer langsamen Konvergenz führt.

Es ist möglich, dass der erste Optimierer die Nebenbedingungen nicht bei jeder Iteration beachtet, sondern nur beim Endergebnis berücksichtigt. Vorzugsweise beachtet der erste Optimierer die Nebenbedingungen jedoch bei jeder Iteration.

Vorzugsweise ermittelt der erste Optimierer die aktuellen Korrekturgrößen gemäß einem Innere-Punkte-Verfahren (englisch: interior points method). Derartige Verfahren sind robust, konvergieren sehr schnell und benötigen vor allem nur relativ wenig Speicherplatz. Dadurch ist es möglich, die Optimierung online im Rahmen der Planheitsregelung durchzuführen.

In einer bevorzugten Ausgestaltung ermittelt die Steuereinrichtung die Wirksamkeitsmatrix selbsttätig anhand von Modellen des Walzgerüsts. Dadurch können die Wirksamkeiten der Planheitsstellglieder schnell und zuverlässig ermittelt werden. Insbesondere müssen keine Versuche gefahren werden, bei denen bereits ein Metallband gewalzt wird. Beispiele geeigneter Modelle des Walzgerüsts sind ein Walzkraftmodell, ein Biegemodell, ein Abplattungsmodell, ein Walzspaltmodell, ein Modell zur Modellierung der thermischen und durch Verschleiß bedingten Balligkeit von Walzen und andere mehr.

Die Ermittlung der Wirksamkeitsmatrix erfolgt zumindest zum Zeitpunkt der Inbetriebnahme des Walzgerüsts. Vorzugsweise jedoch ermittelt die Steuereinrichtung die Wirksamkeitsmatrix dynamisch jeweils unmittelbar vor Beginn des Walzens eines jeweiligen Metallbandes neu. Es werden vorzugsweise also für jedes zu walzende Metallband vor dem Walzen des jeweiligen Metallbandes die Modelle erneut aufgerufen und ausgewertet und anhand der Auswertung die Wirksamkeitsmatrix ermittelt.

Noch besser ist es, wenn die Steuereinrichtung die Wirksamkeitsmatrix auch während des Walzens des jeweiligen Metallbandes dynamisch nachführt. Beispielsweise kann die Steuereinrichtung auch während des Walzens des jeweiligen Metallbandes die Modelle erneut aufrufen und auswerten. Ebenso ist es möglich, dass das Nachführen der Wirksamkeitsmatrix aufgrund einer Bewertung modellgestützt ermittelter erwarteter Planheitswerte und der Planheitsmesswerte erfolgt. Eine derartige Bewertung und kann beispielsweise mittels eines neuronalen Netzes erfolgen.

Die Aufgabe wird weiterhin durch ein Computerprogramm mit den Merkmalen des Anspruchs 15 gelöst. Erfindungsgemäß bewirkt die Abarbeitung des Computerprogramms, dass die Steuereinrichtung das Walzgerüst gemäß einem erfindungsgemäßen Betriebsverfahren betreibt.

Die Aufgabe wird weiterhin durch eine Steuereinrichtung für ein Walzgerüst zum Walzen eines Metallbandes mit den Merkmalen des Anspruchs 16 gelöst. Erfindungsgemäß ist die Steuereinrichtung mit einem erfindungsgemäßen Computerprogramm programmiert, so dass sie das Walzgerüst gemäß einem erfindungsgemäßen Betriebsverfahren betreibt.

Die Aufgabe wird weiterhin durch ein Walzgerüst zum Walzen eines Metallbandes mit den Merkmalen des Anspruchs 17 gelöst. Erfindungsgemäß weist das Walzgerüst eine erfindungsgemäße Steuereinrichtung auf, von der die Planheitsstellglieder des Walzgerüsts gemäß einem erfindungsgemäßen Betriebsverfahren angesteuert werden.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1     ein Walzgerüst zum Walzen eines Metallbandes von der Seite,

FIG 2     das Walzgerüst von FIG 1 von oben,

FIG 3     das Walzgerüst von FIG 1 in Transportrichtung des Metallbandes gesehen,

FIG 4     eine Messeinrichtung von unten,

FIG 5     die innere Struktur einer Steuereinrichtung,

FIG 6     ein Ablaufdiagramm,

FIG 7     eine Modifikation der inneren Struktur von FIG 5 und

FIG 8     eine alternative Ausgestaltung der inneren Struktur von FIG 5.

Beschreibung der Ausführungsformen

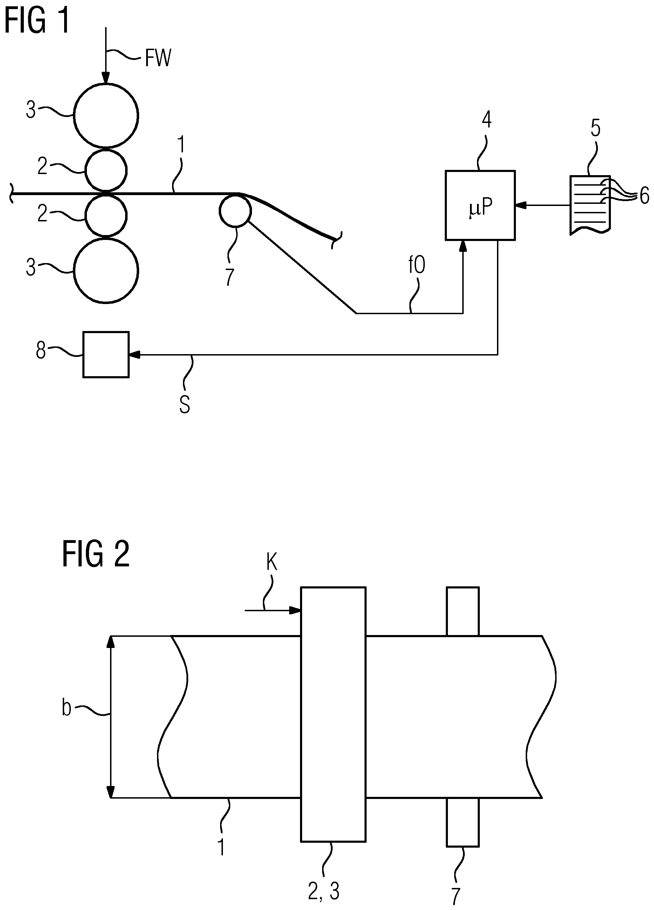

Gemäß den FIG 1 bis 3 weist ein Walzgerüst zum Walzen eines Metallbandes 1 eine Anzahl von Walzen 2, 3 auf. In der Regel umfassen die Walzen 2, 3 zusätzlich zu Arbeitswalzen 2 Stützwalzen 3. Oftmals sind keine weiteren Walzen vorhanden. In diesem Fall handelt es sich bei dem Walzgerüst um ein Quartogerüst In manchen Fällen sind auch weitere Walzen vorhanden, beispielsweise bei einem Sextogerüst zwischen den beiden Arbeitswalzen 2 und den beiden Stützwalzen 3 je eine Zwischenwalze. Auch andere Ausgestaltungen sind bekannt, beispielsweise als 12-Rollen-Walzgerüst oder als 20-Rollen-Walzgerüst.

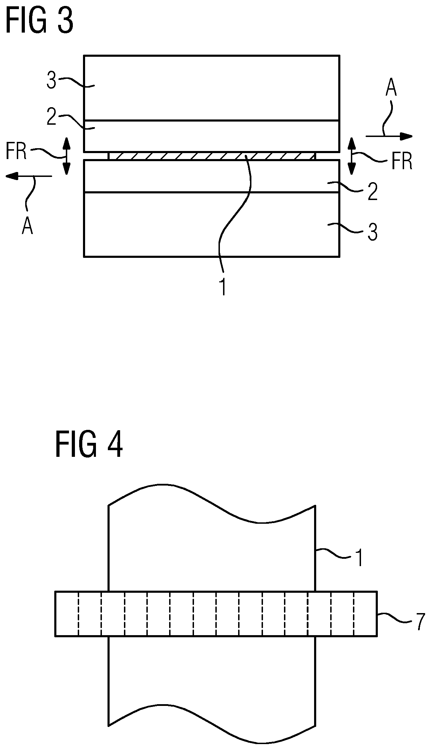

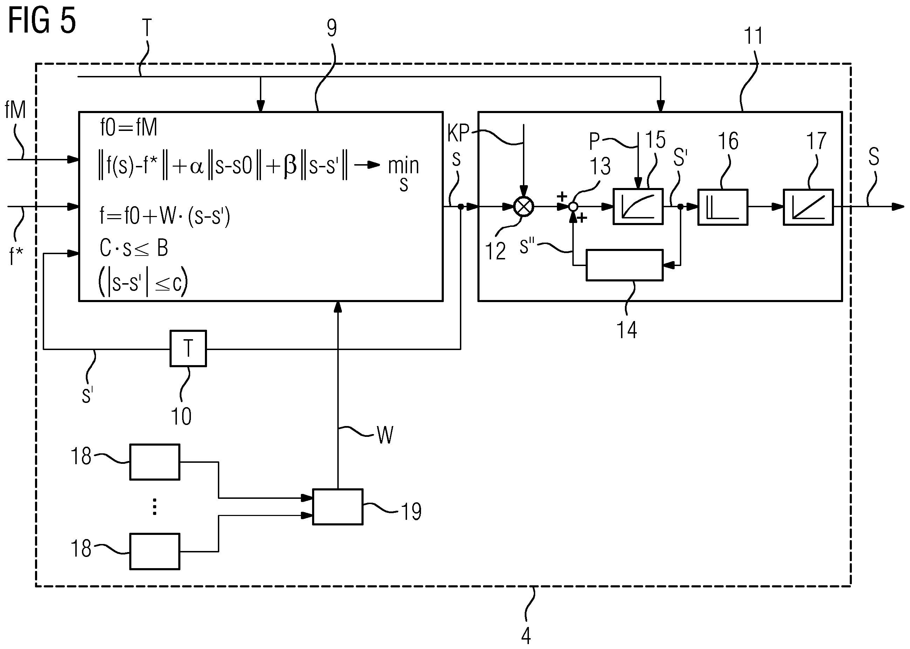

Das Walzgerüst wird von einer Steuereinrichtung 4 gesteuert. Die Steuereinrichtung 4 ist in der Regel als softwareprogrammierbare Steuereinrichtung ausgebildet. Dies ist in FIG 1 durch die Angabe "μP" (für "Mikroprozessor") innerhalb der Steuereinrichtung 4 angedeutet. Die Steuereinrichtung 4 ist mit einem Computerprogramm 5 programmiert. Das Computerprogramm 5 umfasst Maschinencodes 6, der von der Steuereinrichtung 4 abarbeitbar ist. Die Abarbeitung des Maschinencodes 6 durch die Steuereinrichtung 4 bewirkt, dass die Steuereinrichtung 4 das Walzgerüst gemäß einem erfindungsgemäßen Betriebsverfahren betreibt Nachstehend wird zunächst unter zusätzlicher Bezugnahme auf die FIG 4 und 5 eine erste grundlegende Ausgestaltung der vorliegenden Erfindung näher erläutert.

Im Rahmen der ersten grundlegenden Ausgestaltung ist dem Walzgerüst gemäß FIG 1 eine Messeinrichtung 7 nachgeordnet, mittels derer im Betrieb des Walzgerüsts Planheitsmesswerte fM erfasst werden. Die Erfassung der Planheitsmesswerte fM erfolgt ortsaufgelöst über die Breite b des Metallbandes 1. Beispielsweise kann die Messeinrichtung 7 entsprechend der Darstellung in FIG 4 als segmentierte Messrolle ausgebildet sein, die auslaufseitig des Walzgerüsts angeordnet ist. Derartige segmentierte Messrollen sind Fachleuten allgemein bekannt. Aufgrund der Erfassung der Planheitsmesswerte fM ortsaufgelöst über die Breite b des Metallbandes 1 stellen die Planheitsmesswerte fM nicht einen Skalar dar, sondern einen Vektor. fM bezeichnet also die Gesamtheit der Planheitsmesswerte fM, nicht nur einen einzelnen, an einem bestimmten Ort in Bandbreite des Metallbandes 1 gesehen erfassten Wert. Die Ortsauflösung kann nach Bedarf sein. Oftmals bewegt sich die Anzahl an Stützstellen, für die jeweils ein einzelner Planheitsmesswert fM erfasst wird, im oberen zweistelligen Bereich.

Die Planheitsmesswerte fM werden gemäß FIG 5 der Steuereinrichtung 4 als anfängliche Planheitswerte f0 zugeführt. Weiterhin werden der Steuereinrichtung 4 zugehörige Planheitssollwerte f* zugeführt. Auch bei den Planheitssollwerten f* handelt es sich somit nicht um einen einzelnen Sollwert, sondern um die Gesamtheit der Planheitssollwerte f*, also einen entsprechenden Vektor.

Die Steuereinrichtung 4 ermittelt mit einem Arbeitstakt T jeweils eine Anzahl von Stellgrößen S für eine entsprechende Anzahl von Planheitsstellgliedern 8 und steuert diese entsprechend den ermittelten Stellgrößen S an. Mit jedem Arbeitstakt T werden also die Stellgrößen S neu ermittelt. Sie bleiben sodann bis zur nächsten Ermittlung der Stellgrößen S gültig. Der Arbeitstakt T liegt meist im Bereich unterhalb von 1 Sekunde, beispielsweise zwischen 0,2 Sekunden und 0,5 Sekunden.

Mittels der Planheitsstellglieder 8 wird die Planheit des aus dem Walzgerüst auslaufenden Metallbandes 1 beeinflusst. Beispielsweise können über entsprechende Rückbiegeeinrichtungen Rückbiegekräfte FR auf die Arbeitswalzen 2 ausgeübt werden. Alternativ oder zusätzlich können gegebenenfalls die Arbeitswalzen 2 (oder, falls vorhanden, die Zwischenwalzen) entsprechend einer Axialverschiebung A axial verschoben werden. Alternativ oder zusätzlich kann mittels einer entsprechenden Einrichtung eine segmentierten Temperaturbeeinflussung erfolgen. Beispielsweise kann mittels einer Kühleinrichtung eine jeweilige lokale Kühlung K der Arbeitswalzen 2 erfolgen. Auch andere Planheitsstellglieder 8 sind möglich.

FIG 5 zeigt für die erste grundlegende Ausgestaltung der vorliegenden Erfindung die innere Struktur der Steuereinrichtung 4. Die in FIG 5 dargestellten Blöcke sind in der Regel jedoch nicht in Hardware vorhanden, sondern Programmbausteine. Sie werden also durch das Abarbeiten des Maschinencodes 6 des Computerprogramms 5 realisiert.

Gemäß FIG 5 implementiert die Steuereinrichtung 4 einen Optimierer 9. Der Optimierer 9 wird nachfolgend als erster Optimierer bezeichnet. Der erste Optimierer 9 ist im Rahmen der Ausgestaltung von FIG 5 der einzige Optimierer.

Ein Optimierer im Sinne der vorliegenden Erfindung ist - allgemein gesprochen - ein Rechenblock, dem gewisse Eingangsgrößen zugeführt werden. Der Rechenblock ermittelt sodann eine Zielfunktion, in welche die Eingangsgrößen und vom Rechenblock angesetzte Ausgangsgrößen eingehen. Der Rechenblock variiert sodann die Ausgangsgrößen mit dem Ziel, die Zielfunktion zu optimieren. In der Regel führt der Rechenblock hierfür mehrere Iterationen durch, wobei er in jeder Iteration jeweils ausgehend von den Eingangsgrößen und den zuletzt angesetzten Ausgangsgrößen jeweils die Zielfunktion ermittelt und ausgehend von der ermittelten Zielfunktion die Ausgangsgrößen mit dem Ziel der Optimierung der Zielfunktion variiert. Derartige Optimierer sind Fachleuten allgemein bekannt. Rein beispielhaft wird auf Optimierer verwiesen, welchen nach folgenden Verfahren arbeiten:

- Verfahren der kontinuierlichen Optimierung wie beispielsweise Simplexverfahren, Innere-Punkte-Verfahren, Trust-Region-Verfahren, Cubic-Overregularization-Verfahren, SLP-Verfahren sowie Verfahren vom Gauß-/Newton-Typ, beispielsweise SQP-Verfahren. Diese Verfahren können nach Bedarf linear oder nicht linear ausgestaltet sein.
- Verfahren der diskreten Optimierung wie beispielsweise Schnittebenenverfahren, Verfahren vom Branch-and-Bound-Typ, Netzwerk-Optimierungsverfahren usw..
- Verfahren der gemischt-ganzzahligen Optimierung, beispielsweise als Kombination kontinuierlicher und diskreter Verfahren.
- Heuristische und metaheuristische Verfahren der Optimierung, beispielsweise genetische Verfahren, evolutionäre Verfahren, Ameisen-Optimierungsverfahren, Schwarm-Optimierungsverfahren, Simulated Annealing und Tabu-Suche.
- genetische Optimierungsverfahren.

Soweit erforderlich, können die obengenannten Optimierungsverfahren mit einer Verarbeitung in einem neuronalen Netz kombiniert werden.

Dem ersten Optimierer 9 werden die anfänglichen Planheitswerte f0 und die Planheitssollwerte f* zugeführt. Der erste Optimierer 9 ermittelt Korrekturgrößen s, und zwar für jedes Planheitsstellglied 8 jeweils einen eigenen Wert. Die Korrekturgrößen s sind für den aktuellen Arbeitstakt T gültig und werden daher nachstehend als aktuelle Korrekturgrößen s bezeichnet. Analog zu den anfänglichen Planheitswerten f0 und den Planheitssollwerten f* steht das Bezugszeichen s somit ebenfalls für die Gesamtheit der aktuellen Korrekturgrößen. Auch hier handelt es sich also - zumindest in der Regel - nicht um einen Skalar, sondern um einen Vektor. Es ist jedoch in Einzelfällen möglich, dass nur ein einzelnes Planheitsstellglied 8 vorhanden ist. In diesem Fall entartet der Vektor s zu einem Skalar. Die Bedeutung der aktuellen Korrekturgrößen s wird aus späteren Ausführungen ersichtlich werden.

Die aktuellen Korrekturgrößen s werden wieder dem ersten Optimierer 9 zugeführt. Sie werden jedoch zuvor in einem Verzögerungsglied 10 um einen (1) Arbeitstakt T verzögert. Die dem ersten Optimierer 9 in einem bestimmten Arbeitstakt T zugeführten Korrekturgrößen s' entsprechen also den Korrekturgrößen des vorherigen Arbeitstaktes T. Sie werden daher nachstehend als verzögerte Korrekturgrößen bezeichnet und mit dem Bezugszeichen s' versehen.

Der erste Optimierer 9 ermittelt die aktuellen Korrekturgrößen s durch Minimieren der Beziehung

$$\left\| f(s) - f* \right\| + \alpha \left\| s - s0 \right\| + \beta \left\| s - s' \right\| \qquad (5)$$

Der erste Optimierer 9 variiert also die aktuellen Korrekturgrößen s, bis er diese Beziehung minimiert hat. Anders ausgedrückt: Der erste Optimierer 9 setzt zunächst die aktuellen Korrekturgrößen s als vorläufige Werte an. Unter Verwendung der vorläufig angesetzten Werte für die Korrekturgrößen s minimiert der erste Optimierer 9 sodann durch Variieren der aktuellen Korrekturgrößen s die obenstehende Beziehung. Die für den jeweiligen Arbeitstakt T gültigen Korrekturgrößen s sind dann die zuletzt ermittelten bzw. letztmalig variierten aktuellen Korrekturgrößen s.

In der genannten Beziehung ist f eine Gesamtheit von Planheitswerten, also wieder ein Vektor. Die Planheitswerte f werden vom ersten Optimierer 9 anhand der anfänglichen Planheitswerte f0 und der aktuellen Korrekturgrößen s ermittelt. Beispielsweise kann der erste Optimierer 9 die Planheitswerte f gemäß der Beziehung

$$f(s) = f0 + W \cdot (s - s') \qquad (6)$$

ermitteln. W ist eine Wirksamkeitsmatrix. Sie gibt individuell an, welchen Einfluss eine bestimmte einzelne Korrekturgröße s auf welchen der Planheitswerte f hat.

s0 ist eine Gesamtheit von Zielwerten für die Korrekturgrößen s. Die Zielwerte s0 können beispielsweise derart bestimmt sein, dass die zugehörigen Planheitsstellglieder 8 möglichst gering belastet werden, beispielsweise möglichst wenig ausgesteuert werden. Die Zielwerte s0 können der Steuereinrichtung 5 fest vorgegeben sein. Alternativ können sie der Steuereinrichtung 5 als Variable oder als Parameter vorgegeben werden.

$\alpha$ und $\beta$ sind Wichtungsfaktoren. Sie weisen in jedem Fall einen nicht-negativen Wert auf. Im Regelfall sind sie größer als 0. Sie können dem ersten Optimierer 9 fest vorgegeben sein oder parametrierbar sein.

Der erste Optimierer 9 beachtet im Rahmen der Ermittlung der aktuellen Korrekturgrößen s Nebenbedingungen. Die Nebenbedingungen umfassen lineare Nebenbedingungen. Vorzugsweise umfassen die Nebenbedingungen sogar ausschließlich lineare Nebenbedingungen.

Insbesondere beachtet der erste Optimierer 9 in jedem Fall lineare Nebenbedingungen der Form

$$C \cdot s \leq B \qquad (7)$$

Hierbei ist C eine Matrix. B ist ein Vektor mit den von den aktuellen Korrekturwerten s einzuhaltenden Nebenbedingungen. Zusätzlich kann der erste Optimierer 9 weitere lineare Nebenbedingungen der Form

$$\left| s - s' \right| \leq c \qquad (8)$$

beachten. Hierbei ist c ein Vektor mit den von der Differenz der aktuellen Korrekturwerte s gegenüber den verzögerten Korrekturwerten s' einzuhaltenden Nebenbedingungen.

Geeignete Optimierer sind Fachleuten als solche bekannt. Die Implementierung des ersten Optimierers 9 kann daher nach Bedarf sein. Vorzugsweise ermittelt der erste Optimierer 9 die Korrekturgrößen s gemäß einem Innere-Punkte-Verfahren.

Die mittels des ersten Optimierers 9 ermittelten aktuellen Korrekturgrößen s - also die aktuellen Korrekturgrößen s nach dem Variieren der Korrekturgrößen s - stellen die Basis dar, von der ausgehend die Steuereinrichtung 4 die Stellgrößen S für die Planheitsstellglieder 8 ermittelt.

In der Regel variiert der erste Optimierer 9 die aktuellen Korrekturgrößen s in mehreren Iterationen. Er versucht also nach und nach immer bessere aktuelle Korrekturgrößen s zu ermitteln. Der erste Optimierer 9 beendet in diesem Fall das Variieren der aktuellen Korrekturgrößen, sobald mindestens eines der nachfolgend genannten Abbruchkriterien erfüllt ist:

- Der erste Optimierer 9 hat eine vorbestimmten Anzahl von Iterationen ausgeführt.
- Der erste Optimierer 9 hat die aktuellen Korrekturgrößen s für eine vorbestimmte Zeit variiert.
- Die aktuellen Korrekturgrößen s haben sich gegenüber der vorhergehenden Iteration nur mehr unwesentlich geändert. Zu diesem Zweck kann der Term

$$\left\| s - s' \right\|$$

mit einer vorbestimmten Schwelle verglichen werden. Unterschreitet der genannte Term diese Schwelle, erkennt der erste Optimierer 9 auf nur mehr unwesentliche Änderung.
- Die Beziehung

$$\left\| f(s) - f^* \right\| + \alpha \left\| s - s0 \right\| + \beta \left\| s - s' \right\|$$

als Ganzes hat sich gegenüber der vorhergehenden Iteration nur mehr unwesentlich geändert. Zu diesem Zweck kann die genannte Beziehung mit einer vorbestimmten Schwelle verglichen werden. Unterschreitet der genannte Term diese Schwelle, erkennt der erste Optimierer 9 auf nur mehr unwesentliche Änderung.

Alternativ oder zusätzlich ist es auch möglich, dass der erste Optimierer 9 prüft, ob anderes Abbruchkriterium erfüllt ist. Entscheidend ist, dass durch das resultierende Abbruchkriterium gewährleistet ist, dass nur eine endliche Anzahl an Iterationen durchgeführt wird.

Die zuletzt ermittelten aktuellen Korrekturgrößen s müssen die Nebenbedingungen gemäß Ungleichung (7) bzw. gemäß den Ungleichungen (7) und (8) einhalten. Bei den Korrekturgrößen s, die zwischenzeitlich ermittelt werden und später weiter variiert werden, ist dies nicht zwingend der Fall. Vorzugsweise beachtet der erste Optimierer 9 die Nebenbedingungen jedoch bei jeder Iteration. Dies ist insbesondere dann der Fall, wenn der erste Optimierer 9 gemäß einem Verfahren der kontinuierlichen Optimierung arbeitet, insbesondere gemäß einem Innere-Punkte-Verfahren.

Für die endgültige Ermittlung der Stellgrößen S implementiert die Steuereinrichtung in der Ausgestaltung gemäß FIG 5 vorzugsweise einen Planheitsregler 11. Der Planheitsregler 11 ist dem ersten Optimierer 9 nachgeordnet. Dem Planheitsregler 11 werden die von dem ersten Optimierer 9 ermittelten aktuellen Korrekturgrößen s zugeführt. Er ermittelt daraus die Stellgrößen S für die Planheitsstellglieder 8.

Prinzipiell kann der Planheitsregler 11 auf verschiedene Art und Weise ausgebildet sein, beispielsweise als konventioneller PI-Regler. Entsprechend der Darstellung in FIG 5 ist der Planheitsregler 11 jedoch als Regler nach dem Beobachter-Prinzip ausgebildet.

Demzufolge multipliziert der Planheitsregler 11 zunächst mittels eines Multiplizierers 12 die aktuellen Korrekturgrößen s mit einem Verstärkungsfaktor KP. Der Verstärkungsfaktor KP ist stets positiv. In der Regel ist er kleiner als 1. Nach Möglichkeit sollte der Verstärkungsfaktor KP so hoch wie möglich gewählt werden. Zu den so ermittelten gewichteten aktuellen Korrekturgrößen wird in einem Knotenpunkt 13 das Ausgangssignal s" eines Streckenmodells 14 des Walzgerüsts addiert.

Anhand der so gebildeten Summe ermittelt der Planheitsregler 11 ein vorläufiges Signal S'. Das vorläufige Signal S' ist - analog zu den Stellgrößen S und den Korrekturgrößen s, s' - ein Vektor. Im einfachsten Fall ist das vorläufige Signal S' mit der gebildeten Summe identisch. In der Regel erfolgt zur Ermittlung des vorläufigen Signals S' jedoch eine Filterung der gebildeten Summe in einem Filter 15. Der Filter 15 kann insbesondere als Tiefpassfilter ausgebildet sein. Es ist möglich, dass der Filter 15 nur einmalig im Rahmen der Inbetriebnahme des Walzgerüsts eingestellt wird. Vorzugsweise aber kann die Steuereinrichtung 4 dem Filter 15 auch zu späteren Zeitpunkten Parameter P neu vorgeben und dadurch den Filter 15 dynamisch parametrieren. Sodann differenziert der Planheitsregler 11 das vorläufige Signal S' in einem Differenzierer 16.

Das differenzierte Signal wird sodann in einem Integrator 17 integriert. Das Ausgangssignal des Integrators 17 entspricht den Stellgrößen S bzw. - falls die Stellgrößen S sich als Summe mehrerer Summanden ergeben - einem der Summanden. Die Stellgrößen S werden an die Planheitsstellglieder 8 ausgegeben. Es ist möglich, dass der Integrator 17 Bestandteil des Planheitsreglers 11 ist. Alternativ kann er außerhalb des Planheitsreglers 11 angeordnet sein.

Das vorläufige Signal S' führt der Planheitsregler 11 dem Streckenmodell 14 des Walzgerüsts als Eingangssignal zu. Das Streckenmodell 14 modelliert die Wirkung der Planheitsstellglieder 8 aus Sicht der Steuereinrichtung 4. Insbesondere modelliert das Streckenmodell 14, mit welchem zeitlichen Übergangsverhalten die Messeinrichtung 7 einen im Walzspalt des Walzgerüsts entstandenen Planheitsfehler erfasst. Die hierfür benötigten Modellparameter lassen sich in der Regel ohne weiteres aus der Anlagengeometrie bestimmen. Dies ist dem Fachmann bekannt.

Wenn also zum Zeitpunkt x eine Ansteuerung y eines bestimmten Planheitsstellgliedes 8 erfolgt, gibt das Streckenmodell 14 wieder, welche Wirkung die Ansteuerung y zu welchem Zeitpunkt t bei der Messwerterfassung zeigt. Das Streckenmodell 14 berücksichtigt das dynamische Verhalten des jeweiligen Planheitsstellgliedes 8. Das Streckenmodell 14 berücksichtigt weiterhin etwaige Totzeiten, beispielsweise die Transportzeit, die (in Transportrichtung des Metallbandes 1 gesehen) vom Einwirken des jeweiligen Planheitsstellgliedes 8 auf eine bestimmte Stelle des Metallbandes 1 bis zum Erfassen der Planheitsmesswerte fM für diese Stelle durch die Messeinrichtung 7 vergeht. Auch berücksichtigt das Streckenmodell 14 etwaige Verzögerungszeiten bei der Messwerterfassung.

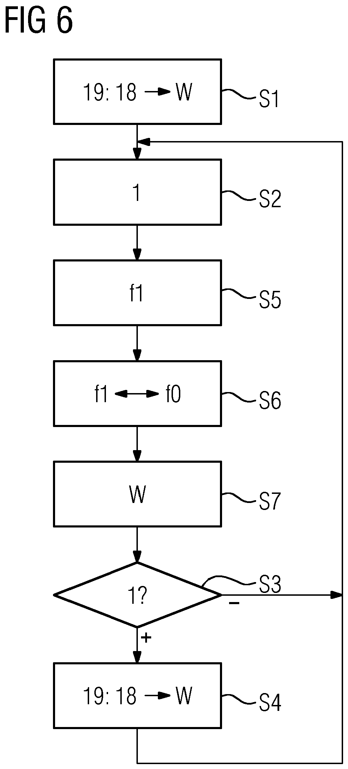

Die Steuereinrichtung 4 hat oftmals Zugriff auf Modelle 18 des Walzgerüsts. Beispielsweise können die Modelle 18 in die Steuereinrichtung 4 integriert sein. Die Modelle 18 modellieren das Verhalten des Walzgerüsts im Betrieb. Die Modelle 18 können beispielsweise ein Walzkraftmodell, ein Biegemodell, ein Abplattungsmodell, ein Walzspaltmodell, ein Modell zur Modellierung der thermischen und durch Verschleiß bedingten Balligkeit von Walzen 2, 3 des Walzgerüsts und andere mehr umfassen. Vorzugsweise ruft die Steuereinrichtung 4 entsprechend der Darstellung in FIG 6 zumindest im Rahmen der Inbetriebnahme des Walzgerüsts in einem Schritt S1 die Modelle 18 auf und ermittelt anhand der Modelle 18 in einer Ermittlungseinrichtung 19 selbsttätig die Wirksamkeitsmatrix W. Erst danach erfolgt in einem Schritt S2 das Walzen des Metallbandes 1 bzw. gegebenenfalls von mehreren Metallbändern 1.

Vorzugsweise sind zusätzlich Schritte S3 und S4 vorhanden. In diesem Fall prüft die Steuereinrichtung 4 im Schritt S3, ob ein neues Metallband 1 gewalzt werden soll. Wenn dies der Fall ist, geht die Steuereinrichtung 4 zum Schritt S4 über. Im Schritt S4 ruft die Steuereinrichtung - wie im Schritt S1

- die Modelle 18 auf und ermittelt anhand der Modelle 18 selbsttätig die Wirksamkeitsmatrix W. Durch die Schritte S3 und S4 wird also implementiert, dass die Steuereinrichtung 4 die Wirksamkeitsmatrix W dynamisch jeweils unmittelbar vor Beginn des Walzens eines jeweiligen Metallbandes 1 neu ermittelt.

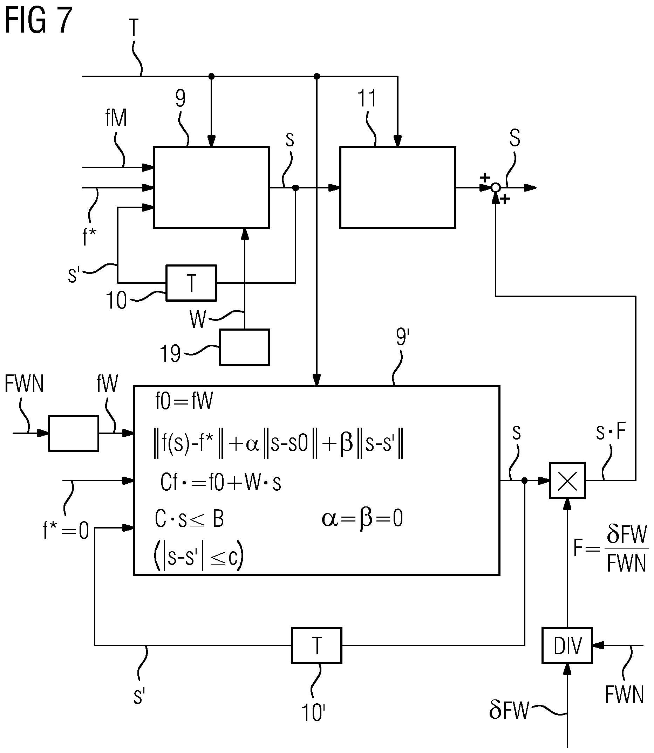

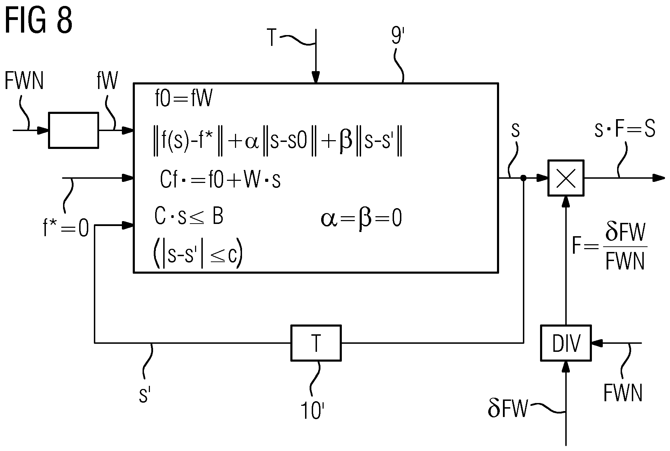

Es ist sogar möglich, dass die Steuereinrichtung 4 die Wirksamkeitsmatrix W auch während des Walzens des jeweiligen Metallbandes 1 dynamisch nachführt. Dies ist auch bei den später erläuterten Ausgestaltungen gemäß den FIG 7 und 8 der Fall. Falls ein Nachführen erfolgen soll, kann dies im Falle der Ausgestaltungen der FIG 5 und 7 beispielsweise durch Schritte S5 bis S7 realisiert werden. In diesem Fall ermittelt die Steuereinrichtung im Schritt S5 erwartete Planheitswerte f1. Die erwarteten Planheitswerte f1 können beispielsweise modellgestützt unter Verwendung des Streckenmodells 14 und/oder der Modelle 18 des Walzgerüsts ermittelt werden. Im Schritt S6 bewertet die Steuereinrichtung 4 die erwarteten Planheitswerte f1 und die Planheitsmesswerte fM. Basierend auf der Bewertung des Schrittes S6 kann die Steuereinrichtung 4 sodann im Schritt S7 die Wirksamkeitsmatrix W nachführen. Im Falle der Ausgestaltung gemäß FIG 8 kann das dynamische Nachführen auf andere Weise implementiert werden.

Nachfolgend wird in Verbindung mit FIG 7 eine Modifikation der Ausgestaltung von FIG 5 erläutert. Im Rahmen der Ausgestaltung von FIG 7 ist ein weiterer Optimierer 9' vorhanden. Der Optimierer 9' wird daher nachfolgend zur Unterscheidung vom ersten Optimierer 9 als zweiter Optimierer bezeichnet. Der zweite Optimierer 9' ist gleichartig zum ersten Optimierer 9 aufgebaut. Nachfolgend wird in Verbindung mit FIG 7 die Wirkungsweise des zweiten Optimierers 9' erläutert. Es sei darauf hingewiesen, dass im Rahmen der nachfolgenden Erläuterung zwar dieselben Größen verwendet werden, dass die Größen jedoch unabhängig von den Größen sind, die für den ersten Optimierer 9 verwendet werden. Trotz Verwendung der gleichen Bezugszeichen kann es sich also um andere Werte handeln.

Der zweite Optimierer 9' ermittelt ebenfalls aktuelle Korrekturgrößen s durch Minimieren der Beziehung

$$\|f(s) - f*\| + \alpha\|s - s0\| + \beta\|s - s'\| \qquad (9)$$

Der zweite Optimierer 9' variiert also die für ihn gültigen aktuellen Korrekturgrößen s, bis er diese Beziehung minimiert hat. Der zweite Optimierer 9' berücksichtigt vorzugsweise die gleichen Nebenbedingungen wie der erste Optimierer 9. Weiterhin ermittelt auch der zweite Optimierer 9 die Korrekturgrößen s vorzugsweise gemäß einem Innere-Punkte-Verfahren. Für den zweiten Optimierer 9' weisen die Wichtungsfaktoren $\alpha$, $\beta$ jedoch den Wert 0 auf. Der zweite Optimierer 9' optimiert im Ergebnis also die Beziehung

$$\|f(s) - f*\| \qquad (10)$$

Aus diesem Grund ist für den zweiten Optimierer 9' belanglos, welchen Wert die Korrekturgrößen s' des vorherigen Arbeitstaktes T aufweisen.

f ist - analog zum ersten Optimierer 9 - eine Gesamtheit von Planheitswerten, also wieder ein Vektor. Die Planheitswerte f werden vom Optimierer 9 anhand der anfänglichen Planheitswerte f0 und der für den zweiten Optimierer 9' gültigen aktuellen Korrekturgrößen s ermittelt. Der zweite Optimierer 9' ermittelt - analog zum ersten Optimierer 9 die Planheitswerte f gemäß der Beziehung

$$f(s) = f0 + W \cdot s \qquad (11)$$

Die anfänglichen Planheitswerte f0 entsprechen beim zweiten Optimierer 9' jedoch nicht Planheitsmesswerten fM, sondern einer Gesamtheit von nominellen Planheitswerten fW. Diese wiederum korrespondieren mit einer nominellen Änderung FWN der Walzkraft FW. W ist - wie zuvor - eine Wirksamkeitsmatrix. Sie gibt individuell an, welchen Einfluss eine bestimmte einzelne Korrekturgröße s auf welchen der Planheitswerte f hat. Es kann sich entsprechend der Darstellung in FIG 7 insbesondere um dieselbe Wirksamkeitsmatrix W handeln, die auch für den ersten Optimierer 9 verwendet wird.

Im Falle der Ausgestaltung gemäß FIG 7 ermittelt die Steuereinrichtung 4 die Stellgrößen S für die Planheitsstellglieder 8 unter zusätzlicher Berücksichtigung einer tatsächlichen Änderung $\delta$FW der Walzkraft FW, der nominellen Änderung FWN der Walzkraft FW und der mittels des zweiten Optimierers 9' ermittelten aktuellen Korrekturgrößen s. Insbesondere skaliert die Steuereinrichtung 4 die mittels des zweiten Optimierers 9' ermittelten aktuellen Korrekturgrößen s mit einem Faktor F, wobei sich der Faktor F durch den Quotienten der tatsächlichen Änderung $\delta$FW der Walzkraft FW und der nominellen Änderung FWN der Walzkraft FW ergibt:

$$F = \delta FW / FWN \qquad (12)$$

Gegebenenfalls kann weiterhin - vor oder nach dem Skalieren mit dem Faktor F - eine Glättung in einem Filter erfolgen.

Wie bereits erwähnt, sind die einzelnen Blöcke der inneren Struktur der Steuereinrichtung 4 im Falle einer Realisierung in Software Programmbausteine. Im Falle der Ausgestaltung gemäß FIG 7 ist es daher möglich, ein und denselben Programmbaustein - nämlich die Implementierung des Optimierers - sowohl für den ersten als auch für den zweiten Optimierer 9, 9' zu verwenden. Insbesondere aus diesem Grund ist in FIG 7 auch das Verzögerungsglied 10' mit vorhanden. Die beiden Programmbausteine müssen lediglich individuell für den jeweiligen Verwendungszweck parametriert werden. Beispielsweise können die Wichtungsfaktoren $\alpha$, $\beta$ für den ersten Optimierer 9 auf von 0 verschiedene Werte gesetzt werden, für den zweiten Optimierer 9, 9' auf 0.

Im Rahmen der Ausgestaltung von FIG 7 sind der erste und der zweite Optimierer 9, 9' vorhanden, also sowohl der Optimierer 9, dessen aktuelle Korrekturgrößen s dem Planheitsregler 11 zugeführt werden, als auch der Optimierer 9', dessen aktuelle Korrekturgrößen s nur noch mit dem Faktor F multipliziert werden. Es ist entsprechend der Darstellung in FIG 8, welche die zweite grundlegende Ausgestaltung der vorliegenden Erfindung darstellt, aber auch möglich, dass nur ein einziger Optimierer 9' vorhanden ist, der so arbeitet, wie dies oben stehend in Verbindung mit FIG 7 für den zweiten Optimierer 9' erläutert wurde. In diesem Fall ist also der Optimierer 9', dessen aktuelle Korrekturgrößen s nur noch mit dem Faktor F multipliziert werden, der einzige und damit der erste Optimierer 9' im Sinne der vorliegenden Erfindung.

Eine eigenständige detaillierte Erläuterung der Betriebsweise des ersten Optimierers 9' von FIG 8 ist vorliegend nicht erforderlich, da der erste Optimierer 9' von FIG 8 genauso arbeitet wie der zweite Optimierer 9' von FIG 7.

Die vorliegende Erfindung weist viele Vorteile auf. Aufgrund der online-Optimierung können in jedem Arbeitstakt T optimale Stellgrößen S ermittelt werden. Aufgrund der Ausbildung des Planheitsreglers 11 als nach dem Beobachter-Prinzip kann schnellstmöglich auf Störeinflüsse oder sonstige Änderungen reagiert werden. Die für die Implementierung der vorliegenden Erfindung benötigten Modelle 14, 18 sind üblicherweise in der Steuereinrichtung 4 bereits vorhanden. Dadurch fällt kein zusätzlicher Aufwand für ein Erstellen derartiger Modelle 14, 18 an. Der Filter 15 ermöglicht eine effiziente, von der jeweiligen Anlage abhängige Anpassung des Planheitsreglers 11 an das Störverhalten. Durch die Trennung in den ersten Optimierer 9 einerseits und den Planheitsregler 11 andererseits wird weiterhin die Planheit-Fehleranalyse (die im ersten Optimierer 9 erfolgt) vom dynamischen Verhalten der Regelung (die im Planheitsregler 11 erfolgt) entkoppelt. Dadurch wird eine einfache, modulare Konfiguration der Steuereinrichtung 4 für nahezu beliebige Gerüsttypen ermöglicht. Dies erleichtert die Parametrierung der Steuereinrichtung 4 in der Engineering-Phase und verringert die Inbetriebsetzungszeiten. Weiterhin können gezielt und einfach anlagenabhängige Anpassungen vorgenommen werden. Die Entkopplung vereinfacht weiterhin die Implementierung, so dass Fehler sowohl in der Engineeringsphase als auch in der Inbetriebsetzungsphase vermieden werden. Aufgrund der optimalen Regelung verlängert sich die Lebensdauer der mechanischen Komponenten des Walzgerüsts. Mittels der Kompensation von sich durch Änderungen der Walzkraft FW ergebenden Planheitsfehlern durch Vorsteuerung erhöht sich die Produktivität noch weiter, weil sehr schnell auf Störungen reagiert wird. Die Wirtschaftlichkeit des Betriebs erhöht sich, weil weniger Ausschuss produziert wird. Mittels der vorgenommenen Optimierung werden weiterhin die Stellgrenzen der Planheitsstellglieder 8 bereits im Rahmen der Ermittlung der Stellgrößen S berücksichtigt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

Bezugszeichenliste

| 1 | Metallband |
| 2 | Arbeitswalzen |
| 3 | Stützwalzen |
| 4 | Steuereinrichtung |
| 5 | Computerprogramm |
| 6 | Maschinencode |
| 7 | Messeinrichtung |
| 8 | Planheitsstellglieder |
| 9, 9' | Optimierer |
| 10, 10' | Verzögerungsglieder |
| 11 | Planheitsregler |
| 12 | Multiplizierer |
| 13 | Knotenpunkt |
| 14 | Streckenmodell |
| 15 | Filter |
| 16 | Differenzierer |
| 17 | Integrator |
| 18 | Modelle des Walzgerüsts |
| 19 | Ermittlungseinrichtung |

| A | Axialverschiebung |
| B, c | Vektoren |
| C | Matrix |

| | |
|---|---|
| b | Breite |
| F | Faktor |
| f | Planheitswerte |
| f0 | anfängliche Planheitswerte |
| fM | Planheitsmesswerte |
| fW | nominelle Planheitswerte |
| f* | Planheitssollwerte |
| FR | Rückbiegekräfte |
| FW | Walzkraft |
| FWN | nominelle Änderung der Walzkraft |
| K | lokale Kühlung |
| KP | Verstärkungsfaktor |
| P | Parameter |
| S | Stellgrößen |
| S' | vorläufiges Signal |
| S1 bis S7 | Schritte |
| s | Korrekturgrößen des aktuellen Arbeitstaktes |
| s' | Korrekturgrößen des vorherigen Arbeitstaktes |
| s" | Ausgangssignal des Modells des Walzgerüsts |
| T | Arbeitstakt |
| W | Wirksamkeitsmatrix |
| $\alpha, \beta$ | Wichtungsfaktoren |
| $\delta$FW | tatsächliche Änderung der Walzkraft |

**Patentansprüche**

1. Betriebsverfahren für ein Walzgerüst, in dem ein Metallband (1) gewalzt wird,

  - wobei eine Steuereinrichtung (4) für das Walzgerüst mit einem Arbeitstakt (T) jeweils eine Anzahl an Stellgrößen (S) für eine entsprechende Anzahl von Planheitsstellgliedern (8) des Walzgerüsts ermittelt und die Planheitsstellglieder(8) entsprechend den ermittelten Stellgrößen (S) ansteuert,
  **dadurch gekennzeichnet,**
  - **dass** die Steuereinrichtung (4) einen ersten Optimierer (9, 9') implementiert, der zunächst die aktuellen Korrekturgrößen (s) vorläufig ansetzt und gemäß der Beziehung

$$f(s) = f0 + W \cdot (s - s') \qquad \text{oder} \qquad f(s) = f0 + W \cdot s$$

eine Gesamtheit von Planheitswerten (f) ermittelt, wobei

  -- f die Gesamtheit von Planheitswerten (f) ist,
  -- s eine Gesamtheit der aktuellen Korrekturgrößen (s) ist,
  -- f0 anfängliche Planheitswerte (f0) sind,
  -- W eine Wirksamkeitsmatrix (W) ist und
  -- s' eine Gesamtheit der im vorhergehenden Arbeitstakt (T) ermittelten Korrekturgrößen (s') ist, und sodann durch Variieren der aktuellen Korrekturgrößen (s) die Beziehung

$$\|f(s) - f*\| + \alpha\|s - s0\| + \beta\|s - s'\|$$

minimiert, wobei
  -- f* eine Gesamtheit von Planheitssollwerten (f*) ist,
  -- s0 eine Gesamtheit von Zielwerten (s0) für die Korrekturgrößen (s) ist und
  -- $\alpha$ und $\beta$ Wichtungsfaktoren ($\alpha, \beta$) sind,

  - **dass** der erste Optimierer (9) beim Ermitteln der aktuellen Korrekturgrößen (s) lineare Nebenbedingungen beachtet,

- **dass** die linearen Nebenbedingungen die Form

$$C \cdot s \leq B$$

oder die Form

$$C \cdot s \leq B \qquad \text{und} \qquad |s - s'| < c$$

aufweisen, wobei C eine Matrix, B ein Vektor mit den von den aktuellen Korrekturwerten (s) einzuhaltenden Nebenbedingungen und c ein Vektor mit den von der Differenz der aktuellen Korrekturwerte (s) gegenüber den Korrekturwerten (s') des vorhergehenden Arbeitstaktes (T) einzuhaltenden Nebenbedingungen sind, und
- **dass** die Steuereinrichtung (4) die Stellgrößen (S) für die Planheitsstellglieder (8) unter Berücksichtigung der variierten aktuellen Korrekturgrößen (s) ermittelt.

2. Betriebsverfahren nach Anspruch 1,
**dadurch gekennzeichnet ,**

- **dass** mittels einer Messeinrichtung (7) ortsaufgelöst über die Breite (b) des Metallbandes (1) Planheitsmesswerte (f0) erfasst werden,
- **dass** die Planheitsmesswerte (f0) und die zugehörigen Planheitssollwerte (f*) der Steuereinrichtung (4) als anfängliche Planheitswerte (f0)zugeführt werden.

3. Betriebsverfahren nach Anspruch 2,
**dadurch gekennzeichnet,**

- **dass** die Steuereinrichtung (4) einen dem ersten Optimierer (9) nachgeordneten Planheitsregler (11) implementiert, dem die von dem ersten Optimierer (9) ermittelten aktuellen Korrekturgrößen (s) zugeführt werden und der aus den aktuellen Korrekturgrößen (s) Änderungswerte für die Stellgrößen (S) für die Planheitsstellglieder (8) ermittelt,
- **dass** der Planheitsregler (11) die Summe der mit einem Verstärkungsfaktor (KP) gewichteten aktuellen Korrekturgrößen (s) und des Ausgangssignals (s") eines Streckenmodells (14) des Walzgerüsts bildet,
- **dass** der Planheitsregler (11) anhand der so gebildeten Summe ein vorläufiges Signal (S') ermittelt,
- **dass** der Planheitsregler (11) durch Differenzieren des vorläufigen Signals (S') die Änderungswerte für die Stellgrößen (S) für die Planheitsstellglieder (8) ermittelt und
- **dass** der Planheitsregler (11) das vorläufige Signal (S') dem Streckenmodell (14) des Walzgerüsts als Eingangssignal zuführt.

4. Betriebsverfahren nach Anspruch 3,
**dadurch gekennzeichnet ,**
**dass** der Planheitsregler (11) das vorläufige Signal (S') durch Filtern der gebildeten Summe in einem Filter (15) ermittelt.

5. Betriebsverfahren nach Anspruch 4,
**dadurch gekennzeichnet ,**
**dass** die Steuereinrichtung (4) den Filter (15) dynamisch parametriert.

6. Betriebsverfahren nach einem der Ansprüche 2 bis 5,
**dadurch gekennzeichnet,**

- **dass** die Steuereinrichtung (4) einen zweiten Optimierer (9') implementiert, der gleichartig zum ersten Optimierer (9) aufgebaut ist,
- **dass** die Gesamtheit von Planheitswerten (f) für den zweiten Optimierer (9') anhand einer Gesamtheit von nominellen Planheitswerten (fW) und der für den zweiten Optimierer (9') gültigen aktuellen Korrekturgrößen (s) ermittelt wird,
- **dass** die nominellen Planheitswerte (fW) mit einer nominellen Änderung (FWN) der Walzkraft (FW) korrespondieren,

- **dass** die Wichtungsfaktoren ($\alpha$, $\beta$) für den zweiten Optimierer (9') den Wert 0 aufweisen und
- **dass** die Steuereinrichtung (4) die Stellgrößen (S) für die Planheitsstellglieder (8) unter zusätzlicher Berücksichtigung einer tatsächlichen Änderung ($\delta$FW) der Walzkraft (FW), der nominellen Änderung (FWN) der Walzkraft (FW) und der mittels des zweiten Optimierers (9') ermittelten aktuellen Korrekturgrößen (s) ermittelt.

7. Betriebsverfahren nach Anspruch 1,
   **dadurch gekennzeichnet,**

   - **dass** die anfänglichen Planheitswerte (f0) mit einer Gesamtheit von nominellen Planheitswerten (fW) korrespondieren,
   - **dass** die nominellen Planheitswerte (fW) mit einer nominellen Änderung (FWN) der Walzkraft (FW) korrespondieren,
   - **dass** die Wichtungsfaktoren ($\alpha$, $\beta$) den Wert 0 aufweisen und
   - **dass** die Steuereinrichtung (4) die Stellgrößen (S) für die Planheitsstellglieder (8) unter Berücksichtigung einer tatsächlichen Änderung ($\delta$FW) der Walzkraft (FW), der nominellen Änderung (FWN) der Walzkraft (FW) und der ermittelten aktuellen Korrekturgrößen (s) ermittelt.

8. Betriebsverfahren nach einem der obigen Ansprüche,
   **dadurch gekennzeichnet,**
   **dass** der erste Optimierer (9, 9') die aktuellen Korrekturgrößen (s) in mehreren Iterationen variiert.

9. Betriebsverfahren nach Anspruch 8,
   **dadurch gekennzeichnet,**
   **dass** der erste Optimierer (9, 9') das Variieren der aktuellen Korrekturgrößen (s) beendet, sobald

   - er eine vorbestimmten Anzahl von Iterationen ausgeführt hat und/oder
   - er die aktuellen Korrekturgrößen (s) für eine vorbestimmte Zeit variiert hat und/oder
   - die aktuellen Korrekturgrößen (s) sich von Iteration zu Iteration nur mehr unwesentlich ändern und/oder
   - die Beziehung

$$\left\| f(s) - f^* \right\| + \alpha \left\| s - s0 \right\| + \beta \left\| s - s' \right\|$$

   sich nur mehr unwesentlich ändert und/oder
   - ein anderes Abbruchkriterium erfüllt ist.

10. Betriebsverfahren nach Anspruch 8 oder 9,
    **dadurch gekennzeichnet,**
    **dass** der erste Optimierer (9, 9') die Nebenbedingungen bei jeder Iteration beachtet.

11. Betriebsverfahren nach einem der obigen Ansprüche,
    **dadurch gekennzeichnet,**
    **dass** der erste Optimierer (9) die Korrekturgrößen (s) gemäß einem Innere-Punkte-Verfahren ermittelt.

12. Betriebsverfahren nach Anspruch 11,
    **dadurch gekennzeichnet,**
    **dass** die Steuereinrichtung (4) die Wirksamkeitsmatrix (W) selbsttätig anhand von Modellen (18) des Walzgerüsts ermittelt.

13. Betriebsverfahren nach Anspruch 12,
    **dadurch gekennzeichnet,**
    **dass** die Steuereinrichtung (4) die Wirksamkeitsmatrix (W) dynamisch jeweils unmittelbar vor Beginn des Walzens eines jeweiligen Metallbandes (1) neu ermittelt.

14. Betriebsverfahren nach Anspruch 13,
    **dadurch gekennzeichnet,**
    **dass** die Steuereinrichtung (4) die Wirksamkeitsmatrix (W) auch während des Walzens des jeweiligen Metallbandes (1) dynamisch nachführt.

**15.** Computerprogramm, das Maschinencode (6) umfasst, der von einer Steuereinrichtung (4) für ein Walzgerüst zum Walzen eines Metallbandes (1) abarbeitbar ist, wobei die Abarbeitung des Maschinencodes (6) durch die Steuereinrichtung (4) bewirkt, dass die Steuereinrichtung (4) das Walzgerüst gemäß einem Betriebsverfahren nach einem der obigen Ansprüche betreibt.

**16.** Steuereinrichtung für ein Walzgerüst zum Walzen eines Metallbandes (1), wobei die Steuereinrichtung als softwareprogrammierbare Steuereinrichtung ausgebildet ist und mit einem Computerprogramm (5) nach Anspruch 15 programmiert ist, so dass sie das Walzgerüst gemäß einem Betriebsverfahren nach einem der Ansprüche 1 bis 14 betreibt.

**17.** Walzgerüst zum Walzen eines Metallbandes (1),

- wobei das Walzgerüst eine Anzahl von Planheitsstellgliedern (8) aufweist, mittels derer die Planheit des aus dem Walzgerüst auslaufenden Metallbandes (1) beeinflussbar ist,
- wobei das Walzgerüst eine Steuereinrichtung (4) nach Anspruch 16 aufweist, von der die Planheitsstellglieder (8) des Walzgerüsts gemäß einem Betriebsverfahren nach einem der Ansprüche 1 bis 14 angesteuert werden.

**Claims**

**1.** Operating method for a roll stand in which a metal strip (1) is rolled,

- wherein a control device (4) for the roll stand determines by means of a working cycle (T) in each case a number of manipulated variables (S) for a corresponding number of evenness members (8) of the roll stand and actuates the evenness members (8) according to the manipulated variables (S) determined,

**characterised in**

- **that** the control device (4) implements a first optimizer (9, 9'), which initially provisionally sets the current correction variables (s) and determines a totality of evenness values (f) according to the relationship

$$f(s) = f0 + W \cdot (s - s') \quad \text{or} \quad f(s) = f0 + W \cdot s \, ,$$

wherein

-- f is the totality of evenness values (f),
-- s is a totality of the current correction variables (s),
-- f0 are initial evenness values (f0),
-- W is an effectiveness matrix (W) and
-- s' is a totality of the correction variables (s') in the preceding working cycle (T),

and then minimises the relationship

$$\left\| f(s) - f^* \right\| + \alpha \left\| s - s0 \right\| + \beta \left\| s - s' \right\| \, ,$$

by varying the current correction variables (s), wherein

-- f* is a totality of evenness target values (f*),
-- s0 is a totality of target values (s0) for the correction variables (s) and
-- $\alpha$ and $\beta$ are weighting factors ($\alpha$, $\beta$),

- **that** the first optimizer (9) considers linear ancillary conditions when determining the current correction variables (s),
- **that** the linear ancillary conditions have the form

$$C \cdot s \leq B$$

or the form

$$C \cdot s \leq B \qquad \text{and} \qquad \left| s - s' \right| < c \,,$$

wherein C is a matrix, B is a vector having the ancillary conditions to be upheld by the current correction values (s) and c is a vector having the ancillary conditions to be upheld by the difference between the current correction values (s) and the correction values (s') of the preceding working cycle (T) and
- **that** the control device (4) determines the manipulated variables (S) for the evenness members (8) taking account of the varied current correction variables (s).

2. Operating method according to claim 1,
**characterised in**

- **that** a measuring device (7) is used to detect measured evenness values (f0) in a spatially resolved manner over the width (b) of the metal strip (1),
- **that** the measured evenness values (f0) and the associated evenness target values (f*) are supplied to the control device (4) as initial evenness values (f0).

3. Operating method according to claim 2,
**characterised in**

- **that** the control device (4) implements an evenness controller (11) arranged downstream of the first optimizer (9) to which the current correction variables (s) determined by the first optimizer (9) are supplied and which determines change values for the manipulated variables (S) for the evenness members (8) from the current correction variables (s),
- **that** the evenness controller (11) forms the sum of the current correction variables (s) weighted with a gain factor (KP) and the output signal (s") from a plant model (14) of the roll stand,
- **that** the evenness controller (11) determines a provisional signal (S') on the basis of the sum formed in this way,
- **that** the evenness controller (11) determines the change values for the manipulated variables (S) for the evenness members (8) by differentiating the provisional signal (S') and
- **that** the evenness controller (11) supplies the provisional signal (S') to the plant model (14) of the roll stand as an input signal.

4. Operating method according to claim 3,
**characterised in**
**that** the evenness controller (11) determines the provisional signal (S') by filtering the sum formed in a filter (15).

5. Operating method according to claim 4,
**characterised in**
**that** the control device (4) dynamically parameterises the filter (15).

6. Operating method according to one of claims 2 to 5, **characterised in**

- **that** the control device (4) implements a second optimizer (9'), which is structured in the same way as the first optimizer (9),
- **that** the totality of evenness values (f) for the second optimizer (9') is determined on the basis of a totality of nominal evenness values (fW) and the valid current correction variables (s) for the second optimizer (9'),
- **that** the nominal evenness values (fW) correspond to a nominal change (FWN) in the rolling force (FW),
- **that** the weighting factors ($\alpha$, $\beta$) for the second optimizer (9') have the value 0 and
- **that** the control device (4) determines the manipulated variables (S) for the evenness members (8) while additionally taking into account an actual change ($\delta$FW) in the rolling force (FW), the nominal change (FWN) in the rolling force (FW) and the current correction variables (s) determined by means of the second optimizer (9').

**7.** Operating method according to claim 1,
**characterised in**

- **that** the initial evenness values (f0) correspond to a totality of nominal evenness values (fW),
- **that** the nominal evenness values (fW) correspond to a nominal change (FWN) in the rolling force (FW),
- **that** the weighting factors ($\alpha$, $\beta$) have the value 0 and
- **that** the control device (4) determines the manipulated variables (S) for the evenness members (8) taking account of an actual change ($\delta$FW) in the rolling force (FW), the nominal change (FWN) in the rolling force (FW) and the current correction variables (s) determined.

**8.** Operating method according to one of the above claims, **characterised in**
**that** the first optimizer (9, 9') varies the current correction variables (s) in a plurality of iterations.

**9.** Operating method according to claim 8,
**characterised in**
**that** the first optimizer (9, 9') stops varying the current correction variables (s) as soon as

- it has carried out a predetermined number of iterations and/or
- it has varied the current correction variables (s) for a predetermined time and/or
- the current correction variables (s) now only change insignificantly from iteration to iteration and/or
- the relationship

$$\left\| f(s) - f * \right\| + \alpha \left\| s - s0 \right\| + \beta \left\| s - s' \right\|$$

now only changes insignificantly and/or
- another termination criterion is met.

**10.** Operating method according to claim 8 or 9, **characterised in**
**that** the first optimizer (9, 9') considers the ancillary conditions in each iteration.

**11.** Operating method according to one of the above claims, **characterised in**
**that** the first optimizer (9) determines the correction variables (s) according to an interior-point method.

**12.** Operating method according to claim 11,
**characterised in**
**that** the control device (4) determines the effectiveness matrix (W) automatically on the basis of models (18) of the roll stand.

**13.** Operating method according to claim 12,
**characterised in**
**that** the control device (4) dynamically redetermines the effectiveness matrix (W) in each case immediately before the commencement of the rolling of a respective metal strip (1).

**14.** Operating method according to claim 13,
**characterised in**
**that** the control device (4) also dynamically tracks the effectiveness matrix (W) during the rolling of the respective metal strip (1).

**15.** Computer program comprising machine code (6) that can be executed by a control device (4) for a roll stand for rolling a metal strip (1), wherein the execution of the machine code (6) by the control device (4) causes the control device (4) to operate the roll stand according to an operating method according to one of the above claims.

**16.** Control device for a roll stand for rolling a metal strip (1), wherein the control device is embodied as a software-programmable control device and programmed with a computer program (5) according to claim 15 so that it operates the roll stand according to an operating method according to one of claims 1 to 14.

**17.** Roll stand for rolling a metal strip (1),

- wherein the roll stand comprises a number of evenness members (8) that are able to influence the evenness of the metal strip (1) emerging from the roll stand,
- wherein the roll stand comprises a control device (4) according to claim 16 by which the evenness members (8) of the roll stand are actuated according to an operating method according to one of claims 1 to 14.

## Revendications

1. Procédé de fonctionnement d'une cage de laminoir, dans laquelle une bande métallique (1) est laminée,

- dans lequel un dispositif de commande (4) pour la cage de laminoir avec une cadence de travail (T) détermine respectivement un nombre de grandeurs de réglage (S) pour un nombre correspondant d'éléments de réglage de planéité (8) de la cage de laminoir et qui contrôle les éléments de réglage de planéité (8) en fonction des grandeurs de réglage (S) déterminées,

**caractérisé en ce que**

- le dispositif de commande (4) implémente un premier optimiseur (9, 9') qui fixe d'abord provisoirement la grandeur de correction actuelle (s) et détermine, selon la relation

$$f(s) = f0 + W \cdot (s - s') \qquad \text{ou} \qquad f(s) = f0 + W \cdot s$$

un ensemble de valeurs de planéité (f), dans lequel

- f est l'ensemble des valeurs de planéité (f),
- s est un ensemble des grandeurs de correction actuelles (s),
- f0 représente les valeurs de planéité initiales (f0),
- W est une matrice d'efficacité (W) et
- s' est un ensemble de grandeurs de correction (s') déterminées dans la cadence de travail (T) précédente, et, par la variation des grandeurs de correction actuelles (s), la relation

$$\|f(s) - f^*\| + \alpha\|s - s0\| + \beta\|s - s'\|$$

est minimisée, dans laquelle
- f* est un ensemble de valeurs de consigne de planéité (f*) ,
- s0 est un ensemble de valeurs cibles (s0) pour les grandeurs de correction (s) et
- $\alpha$ et $\beta$ sont des facteurs de pondération ($\alpha$, $\beta$),

- le premier optimiseur (9) respecte, lors de la détermination des grandeurs de correction actuelles (s), des conditions secondaires linéaires,
- les conditions secondaires linéaires présentent la forme

$$C \cdot s \leq B$$

ou la forme

$$C \cdot s \leq B \qquad \text{et} \qquad |s - s'| < c$$

dans lesquelles C est une matrice, B est un vecteur avec les conditions secondaires à respecter par les valeurs de correction actuelles (s) et c est un vecteur avec les conditions secondaires à respecter par la différence entre les valeurs de correction actuelles (s) et les valeurs de correction (s') de la cadence de travail (T) précédente et

- le dispositif de commande (4) détermine les grandeurs de réglage (S) pour les éléments de réglage de planéité (8) en tenant compte des grandeurs de correction actuelles (s) modifiées.

2. Procédé de fonctionnement selon la revendication 1, **caractérisé en ce que**

- au moyen d'un dispositif de mesure (7), des valeurs de mesure de planéité (f0) sont relevées avec une résolution spatiale sur la largeur (b) de la bande métallique (1),
- les valeurs de mesure de planéité (f0) et les valeurs de consigne de planéité (f*) correspondante sont entrées dans le dispositif de commande (4) en tant que valeurs de planéité initiales (f0).

3. Procédé de fonctionnement selon la revendication 2, **caractérisé en ce que**

- le dispositif de commande (4) implémente un régulateur de planéité (11), disposé en aval du premier optimiseur (9), dans lequel sont entrées les grandeurs de correction actuelles (s) déterminées par le premier optimiseur (9) et qui, à partir des grandeurs de correction actuelles (s), détermine des valeurs de modification pour les grandeurs de réglage (S) pour les éléments de réglage de planéité (8),
- le régulateur de planéité (11) génère la somme des grandeurs de correction actuelles (s), pondérées avec un facteur d'amplification (KP), et du signal de sortie (s'') d'un modèle de système (14) de la cage de laminoir,
- le régulateur de planéité (11) détermine, à l'aide de la somme ainsi générée, un signal provisoire (S'),
- le régulateur de planéité (11) détermine, par la différenciation du signal provisoire (S'), les valeurs de modification pour les grandeurs de réglage (S) pour les éléments de réglage de planéité (8) et
- le régulateur de planéité (11) entre le signal provisoire (S') dans le modèle de système (14) de la cage de laminoir en tant que signal d'entrée.

4. Procédé de fonctionnement selon la revendication 3, **caractérisé en ce que**
le régulateur de planéité (11) détermine le signal provisoire (S') par le filtrage de la somme générée dans un filtre (15).

5. Procédé de fonctionnement selon la revendication 4, **caractérisé en ce que**
le dispositif de commande (4) paramètre le filtre (15) de manière dynamique.

6. Procédé de fonctionnement selon l'une des revendications 2 à 5,
**caractérisé en ce que**

- le dispositif de commande (4) implémente un deuxième optimiseur (9') qui est conçu de manière identique au premier optimiseur (9),
- l'ensemble de valeurs de planéité (f) pour le deuxième optimiseur (9') est déterminé à l'aide d'un ensemble de valeurs de planéité nominales (fW) et des grandeurs de correction actuelles (s) valables pour le deuxième optimiseur (9'),
- les valeurs de planéité nominales (fW) correspondent à une modification nominale (FWN) de la force de laminage (FW),
- les facteurs de pondération ($\alpha$, $\beta$) pour le deuxième optimiseur (9') présentent la valeur 0 et
- le dispositif de commande (4) détermine les grandeurs de réglage (S) pour les éléments de réglage de planéité (8) en tenant compte en outre d'une modification effective ($\delta$FW) de la force de laminage (FW), de la modification nominale (FWN) de la force de laminage (FW) et des grandeurs de correction actuelles (s) déterminées au moyen du deuxième optimiseur (9').

7. Procédé de fonctionnement selon la revendication 1, **caractérisé en ce que**

- les valeurs de planéité initiales (f0) correspondent à un ensemble de valeurs de planéité nominales (fW),
- les valeurs de planéité nominales (fW) correspondent à une modification nominale (FWN) de la force de laminage (FW),
- les facteurs de pondération ($\alpha$, $\beta$) présentent la valeur 0 et
- le dispositif de commande (4) détermine les grandeurs de réglage (S) pour les éléments de réglage de planéité (8) en tenant compte d'une modification effective ($\delta$FW) de la force de laminage (FW), de la modification nominale (FWN) de la force de laminage (FW) et des grandeurs de correction actuelles (s) déterminées.

8. Procédé de fonctionnement selon l'une des revendications précédentes,
**caractérisé en ce que**
le premier optimiseur (9, 9') fait varier les grandeurs de correction actuelles (s) en plusieurs itérations.

9. Procédé de fonctionnement selon la revendication 8, **caractérisé en ce que**
le premier optimiseur (9, 9') termine la variation des grandeurs de correction actuelles (s) dès que

- il a exécuté un nombre prédéterminé d'itérations et/ou
- il a fait varier les grandeurs de correction actuelles (s) pendant un temps prédéterminé et/ou
- les grandeurs de correction actuelles (s) ne varient plus que de manière négligeable d'une itération à l'autre et/ou
- la relation

$$\left\| f(s) - f^* \right\| + \alpha \left\| s - s0 \right\| + \beta \left\| s - s \right\|$$

ne varie plus que de manière négligeable et/ou
- un autre critère d'interruption est satisfait.

10. Procédé de fonctionnement selon la revendication 8 ou 9,
**caractérisé en ce que**
le premier optimiseur (9, 9') respecte les conditions secondaires à chaque itération.

11. Procédé de fonctionnement selon l'une des revendications précédentes,
**caractérisé en ce que**
le premier optimiseur (9, 9') détermine les grandeurs de correction (s) selon un procédé à points intérieurs.

12. Procédé de fonctionnement selon la revendication 11, **caractérisé en ce que**
le dispositif de commande (4) détermine automatiquement la matrice d'efficacité (W) à l'aide de modèles (18) de la cage de laminoir.

13. Procédé de fonctionnement selon la revendication 12, **caractérisé en ce que**
le dispositif de commande (4) détermine à nouveau dynamiquement la matrice d'efficacité (W) respectivement immédiatement avant le début du laminage d'une bande métallique respective (1).

14. Procédé de fonctionnement selon la revendication 13, **caractérisé en ce que**
le dispositif de commande (4) suit de manière dynamique la matrice d'efficacité (W) également pendant le laminage de la bande métallique (1) respective.

15. Programme informatique qui comprend un code machine (6) qui peut être traité par un dispositif de commande (4) pour une cage de laminoir pour le laminage d'une bande métallique (1), dans lequel le traitement du code machine (6) par le dispositif de commande (4) fait en sorte que le dispositif de commande (4) fait fonctionner la cage de laminoir conformément à un procédé de fonctionnement selon l'une des revendications précédentes.

16. Dispositif de commande pour une cage de laminoir pour le laminage d'une bande métallique (1), dans lequel le dispositif de commande est conçu comme un dispositif de commande programmable et est programmé avec un programme informatique (5) selon la revendication 15, de façon à faire fonctionner la cage de laminoir conformément à un procédé de fonctionnement selon l'une des revendications 1 à 14.

17. Cage de laminoir pour le laminage d'une bande métallique (1),

- dans laquelle la cage de laminoir comprend une pluralité d'éléments de réglage de planéité (8) au moyen desquels la planéité de la bande métallique (1) sortant de la cage de laminoir peut être influencée,
- dans laquelle la cage de laminoir comprend un dispositif de commande (4) selon la revendication 16, grâce auquel les éléments de réglage de planéité (8) de la cage de laminoir sont contrôlés conformément à un procédé de fonctionnement selon l'une des revendications 1 à 14.

FIG 1

FW

3

2

1

2

3

7

μP  4

5

6

f0

8

S

FIG 2

K

b

1

2, 3

7

FIG 3

FIG 4

FIG 5

EP 3 691 806 B1

FIG 6

```
        ┌─────────────────────┐
        │   19 : 18  ──▶  W    │────╮ S1
        └─────────────────────┘    │
                  │              ◀────────────────┐
                  ▼                                │
        ┌─────────────────────┐                    │
        │          1          │────╮ S2            │
        └─────────────────────┘    │               │
                  │                                 │
                  ▼                                 │
        ┌─────────────────────┐                    │
        │         f1          │────╮ S5            │
        └─────────────────────┘    │               │
                  │                                 │
                  ▼                                 │
        ┌─────────────────────┐                    │
        │    f1  ◀──▶  f0      │────╮ S6            │
        └─────────────────────┘    │               │
                  │                                 │
                  ▼                                 │
        ┌─────────────────────┐                    │
        │          W          │────╮ S7            │
        └─────────────────────┘    │               │
                  │                                 │
                  ▼                                 │
            ◇─────────◇                            │
           ╱    1?     ╲──────╮ S3   ──── ─ ────▶  │
            ◇─────────◇        │                   │
                  │ +                              │
                  ▼                                 │
        ┌─────────────────────┐                    │
        │   19 : 18  ──▶  W    │────╮ S4            │
        └─────────────────────┘    │───────────────┘
```

# FIG 7

FIG 8

$f0 = fW$

$\|f(s)\text{-}f^*\| + \alpha\|s\text{-}s0\| + \beta\|s\text{-}s'\|$

$Cf\cdot = f0 + W\cdot s$

$C\cdot s \leq B \qquad \alpha = \beta = 0$

$\left(|s\text{-}s'| \leq c\right)$

FWN     fW     T     9'

$f^* = 0$

s     $s\cdot F = S$

$F = \dfrac{\delta FW}{FWN}$

T     10'

DIV     FWN

$\delta FW$

s'

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160052032 A1
- WO 2006132585 A1
- WO 9519591 A1
- US 6098060 A
- US 20060282177 A1
- CN 104698842 A

**In der Beschreibung aufgeführte Nicht-Patentliteratur**

- **M. GUAY.** Real-time Dynamic Optimization of Nonlinear Systems: A Flatness-based Approach. *Proceedings of the 44th IEEE Conference on Decision and Control, and the European Control Conference,* 2005, 5842-5847
- **MARK CANNON.** C21 Model Predictive Control. University auf Oxford, 2016